(19) **Europäisches Patentamt**
**European Patent Office**
**Office européen des brevets**

(11) **EP 3 347 672 B1**

(12) **EUROPEAN PATENT SPECIFICATION**

(45) Date of publication and mention
of the grant of the patent:
**22.04.2020 Bulletin 2020/17**

(51) Int Cl.:
***G01B 11/00*** *(2006.01)*     ***G01B 11/04*** *(2006.01)*
***G01F 17/00*** *(2006.01)*

(21) Application number: **16794726.6**

(22) Date of filing: **12.09.2016**

(86) International application number:
**PCT/IB2016/055416**

(87) International publication number:
**WO 2017/042747 (16.03.2017 Gazette 2017/11)**

(54) **AN APPARATUS FOR THE DETERMINATION OF THE FEATURES OF AT LEAST A MOVING LOAD**

VORRICHTUNG ZUR BESTIMMUNG DER MERKMALE VON MINDESTENS EINER BEWEGLICHEN LAST

APPAREIL DE DÉTERMINATION DE CARACTÉRISTIQUES D'AU MOINS UNE CHARGE MOBILE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **11.09.2015 IT UB20153553**

(43) Date of publication of application:
**18.07.2018 Bulletin 2018/29**

(73) Proprietor: **Mer Mec S.p.A.**
**70043 Monopoli (IT)**

(72) Inventors:
 • **BOMBEN, Giuseppe**
 **31050 Badoere di Morgano (IT)**

 • **CEOTTO, Davide**
 **31050 Badoere di Morgano (IT)**
 • **POZZEBON, Andrea**
 **31050 Badoere di Morgano (IT)**

(74) Representative: **Piovesana, Paolo**
**c/o Praxi Intellectual Property S.p.A.- Venezia**
**Via Francesco Baracca, 5/A**
**30173 Venezia-Mestre (IT)**

(56) References cited:
**EP-A1- 2 439 487**     **US-A1- 2005 240 317**
**US-A1- 2014 029 796**     **US-A1- 2014 351 073**

**Description**

The present invention relates to an apparatus for determining the dimensions of at least one moving load, in particular for the purpose of determining the presence and/or number of pallets present in at least one moving load.

It is known that pallets are important load handling instruments for transporting and storing loads and their increasingly more intensive distribution implies a number of requirements related to the need for accurately controlling such handling.

In order to analyze the loads arranged on pallets, it is currently envisaged that a pallet or a stack of pallets is transported by a carrier, which may be a fork-lift truck or a hand pallet truck or other, to an appropriate dedicated measuring station, from where the carrier is moved away to allow the measuring system to analyze the load before the carrier picks it up again to move it towards an appropriate destination, which may be its site in a warehouse or in a container or in another transport compartment.

These operations are found to be rather costly because of the longer routes and standing of the load for the necessary analysis. It has been estimated that the average time required is at least 30 seconds per pallet.

Furthermore, such operations are performed only to measure the volume of the load, while the number of pallets contained in a stack is counted manually and the inevitable inaccuracy of such a count is cause of disputes between users and carriers.

A volume measuring device of moving objects is already known from EP 2439487 B1. In order to detect the contour of a load, this solution suggests to use four contour detection sensors (laser scanners), which scan the load in layers during its passage next to them. Subsequently, a view of the loads is reconstructed from the light rays which are received on cell-like image sensors by appropriately joining the strips present in the single images which are detected in sequence.

In all cases, a laser scanning procedure of this type requires joining the single strips of the detected images at the correct distance, as well as considering the movement of the load so as to obtain an external contour which comprises the loads and its means of transportation. The detected data must therefore be assembled in costly manner, taking into account the movement of the load and this implies costs and possible errors. This depends on the fact that, according to the sensor acquisition speed, each strip of the image is slightly delayed because each point (pixel) of the strip is acquired in sequence. The entity of the distortion depends on both the speed of the load and on the distance of each point of the load from the sensor. Therefore, the movement of the load must be recognized and calculated in order to reconstruct a single image. An odometric sensor capable of detecting the movement of the load with high accuracy is needed for this.

A further disadvantage of the known laser scanning procedure based on the generation of strips is that, although the laser scanners of this type provide a relatively high resolution of the contour of a load, they are rather costly.

A further device for determining the dimensions of a moving load is known from US 7757946 B2, and also displays disadvantages comparable to those described above.

US 8599303 B2 describes the structure of a time of flight camera which can be used to optically detect the dimensions of an object moved on a conveyor belt.

US 6798528 B1 describes a system for determining the dimensions of a moving object using parabolic mirrors. Such a solution is rather costly and moreover cannot be used to measure objects of particular shape with accuracy.

Another device for dynamically measuring a volume of a moving load is described in US 20080035390; furthermore, this is specifically provided to be fitted on a conveyor belt.

Another device for dynamically measuring a volume of a moving load is described in WO 2016020038. In particular, this device measures the volume of a load handled by an industrial fork-lift truck and always necessarily requires the presence of two depth cameras, each of which generates a sequence of low-resolution images from different observation angles which are sent to a processing unit for determining the load volume. In particular, each image is processed so as to identify and extract only the moving objects, which thus define a target zone (ROI) to be used in the subsequent processing at super resolution. More in detail, in order to do this, the data of the target zones of each low-resolution image are transformed from image coordinates into global coordinates and are combined (i.e. recorded and integrated), from the point of view of time and space, so as to generate a cloud of 3D points (i.e. a 3D model) with improved resolution, in all cases higher than that of the images acquired by the cameras. Subsequently, the industrial fork-lift truck is firstly identified and then separated from the load in the 3D model thus created. Finally, the volume of the load is calculated from the 3D model, e.g. by defining the smaller parallelepiped which encloses the 3D model (i.e. the corresponding point cloud) of the load.

Such a solution is very complex because it requires to construct a 3D model by combining all the acquired images. In particular, this causes an increase of the calculation and processing times and cannot provide the information related to the calculated volume in real time. Furthermore, providing the information related to the calculated volume in real time requires a high-performance hardware and/or software infrastructure, which is thus particularly complex and costly.

Furthermore, such a solution cannot calculate the volume of two distinct objects which are moved by two corresponding industrial fork-lift trucks crossing the same working zone in which the two cameras operate at the same time. This is because the chosen architecture consisting of two depth cameras which observe the scene from two symmetric and opposite angles causes the creation of shadow zones (zones of the scene with are not covered by the vision cones of the sensors) because of the occlusion of the viewing field and thus the absence of measurement data. In particular, in such a case, the images acquired by both cameras do not make it possible to discriminate the points appropriately between the two moving objects, and thus do not make it possible to reconstruct the 3D model of the scene to be analyzed in a satisfactory manner.

Not only, such a solution does not envisage managing the pallet counting issue and, moreover, for calculating the inclination of the load it uses information related to the structure of the fork-lift truck and this is not satisfactory because, in the load handling context, there are various types of means of transportation with even very different mutual shapes and features. Not last, the fact that the position of the two cameras does not allow the detection of all the features of the means of transportation implies that calculating the inclination, and thus the volume of the load, cannot be accurate.

US 2014/029796 discloses a first embodiment wherein the system comprises a conveyor belt, a digital camera and a plurality of objects that are arranged on said conveyor belt and are provided with an optical code on their top face. In particular, such optical code (i.e. any graphical representation having the function of storing coded information) has a predetermined and known optical resolution. Therefore, by knowing the optical resolution of the optical codes, the symbology they belong to and the magnification ratio of the imaging sensor of the camera, from the analysis of a single image acquired by the camera the processing unit is capable of determining the distance of the optical codes from the camera.

US 2014/029796 also discloses a second embodiment wherein the distance of each object from the camera is determined - without the use/detection of the optical code - starting from the maximum size of object along the advancing direction. In particular, in this embodiment, the system still comprises a camera and a conveyor belt, on which the objects 3 are arranged, while the presence sensor and the encoder are added. In particular, the use of the presence sensor and of the encoder are essential for providing the data to be used for determining the displacement of objects along the advancing direction, especially when the advancing speed of conveyor belt is not constant.

It is the object of the invention to eliminate these drawbacks and to suggest an apparatus which has improved and/or alternative configuration and performance with respect to the traditional devices and solutions.

It is another object of the injection to suggest an apparatus that provides dimensional and/or volume information of at least one moving load substantially in real time without requiring a very complex or costly hardware and/or software infrastructure for processing the images.

It is another object of invention to suggest an apparatus capable of determining the presence and/or number of pallets present in a moving load.

It is another object of the invention to suggest an apparatus which makes it possible to dynamically analyze a moving load in simple, reliable and accurate manner.

It is another object of the invention to suggest an apparatus which is simple and cost-effective to make and/or implement.

It is another object of the invention to suggest an apparatus which has an alternative characterization in construction and/or functional terms with respect to the traditional ones.

It is another object of the invention to suggest an apparatus which does not introduce any delay in load handling and management.

It is another object of the invention to suggest an apparatus which has small dimensions and can be easily installed and positioned between any two load handling zones.

It is another object of the invention to suggest an apparatus which does not impose constraints which limit the trajectory and/or speed, and consequently the operation, of the carriers.

It is another object of the invention to suggest an apparatus which makes it possible to detect the dimensional and/or volume data of several loads transported by the same means of transportation.

It is another object of the invention to suggest an apparatus which makes it possible to detect the passages of multiple loads which, transported by different means of transportation, cross the installation area of the apparatus itself at the same time either in the same direction or in opposite directions.

It is another object of the invention to suggest an apparatus which makes it possible to detect the dimensional and/or volume data of a load which comprises pallets or goods of even non-standard shape.

It is another object of the invention to suggest an apparatus which can easily interface with the known procedures and programs envisaged in transportation logistics.

It is another object of the invention to suggest an apparatus which can be easily and conveniently interfaced with the automatic storage systems used in automatic warehouses.

It is another object of the invention to suggest an apparatus which provides information useful for optimizing the composition of the load to be positioned on the means of transportation.

It is another object of the invention to suggest an apparatus which automatically provides information useful for optimizing the positioning of the load in the warehouse after that it has been unloaded from the carrier and useful for correctly attributing transport costs.

All these objects, considered individually or in any combination thereof, and others which will be apparent from the following description, are achieved according to the invention by an apparatus as defined in claim 1.

The upper detection means are positioned and configured to acquire a plurality of images from the top, in which at least the upper surface of said load is represented, and to acquire the distance between the means themselves and the upper surface of said load in real time.

The detection means are positioned higher than the maximum predictable height of the load handled by said carrier.

Advantageously, the software program comprises a software module configured for:

- dividing the upper surface of the load, as it was identified in the selected image, into a plurality of sub-areas of known dimensions,
- calculating the volume of each sub-area by using the corresponding depth data associated to the selected image,
- integrating the volume of each sub-area thus calculated to obtain the actual volume of said load.

Advantageously, the software program comprises a software module configured for:

- dividing the upper surface of the load, as it was identified in the selected image, into a plurality of sub-areas of known dimensions,
- determining the maximum, minimum and/or average height of the load and/or the envelope of the upper surface of the load itself, on the basis of the corresponding depth area associated to the selected image and relative to each of said sub-areas.

The detection means are also configured to acquire depth data of the elements present in the scene framed thereby.

Advantageously, a load-bearing structure on which said upper detection means and/or said side detection means are installed, said load-bearing structure comprising at least one upright positioned at said work area.

Advantageously, the load-bearing structure comprises a crosspiece associated on top to said upright and/or to two uprights, which mutually delimit said work area and which are preferably joined by said crosspiece.

Advantageously, in order to determine the presence and/or number of pallets which form said at least one load which is handled by said carrier across said work area, characterized in that said software program is also configured for:

- selecting at least one image, which is the most significant for the purposes of determining the presence and/or number of pallets of said load, from the sequence of images acquired by said side detection means,
- determining the presence and/or the number of pallets which form said load by identifying the portions corresponding to the side openings provided in each pallet in the image thus selected.

Advantageously, portions of substantially rectangular shape are sought in the image thus selected and the dimensions of said portions and the distances between them are calculated in order to determine the presence and/or number of pallets.

Advantageously, in order to select a single image from the sequence of images of the framed scene which were acquired by said detection means, a single image which is the most significant one for the purposes of determining the dimensions and/or the volume of at least one load and/or for the purposes of determining the number of pallets of said load, said software program comprises a software module which is configured for:

- analyzing all the images which were acquired and stored during the passage of the load, so as to automatically associate a score representative of the viewing quality of said load in each image to each one,
- selecting the image which has the best score, from all the images.

Advantageously, in order to select the image which is most significant for the purposes of determining the dimensions and/or the volume of said load from the sequence of images which were acquired by said upper detection means, a score is associated to each image of said sequence of images, the score deriving from the actual area of the upper surface of the load, as resulting from the content of the corresponding pixels of each image, and the area of the rectangle which circumscribes the upper surface of the load itself in each image.

Advantageously, the software program comprises a software module configured to obtain the height of the lower surface of the load from the floor and/or the inclination of the load respect to its correct vertical arrangement on the basis of at least one image obtained by said side detection means. Preferably, said software module is configured to determine the actual height of the load using the height data of the lower surface of the load from the floor and/or the inclination data of the load respect to its corresponding vertical arrangement, said data being determined by said software module.

Advantageously, the software program loaded and run in the control and processing unit is configured to either interface with or be integrated in an enterprise resource planning program.

Advantageously, the software program is configured to associate an identification code to each load which crosses the work area and of which the dimensions and/or volume are determined and/or of which the number of pallets forming it, is counted.

All the above mentioned objects, considered individually or in any combination thereof, and others which will be apparent from the following description, are achieved according to a non-claimed example by an apparatus for determining the number of pallets which form at least one load which is handled by said carrier across a work area, characterized in that it comprises:

- side detection means positioned so as to frame said work area laterally in order to acquire a sequence of images of the side surfaces of said moving load,
- at least one control and processing unit which is connected to said side detection means and in which a software program is loaded configured for:

  - selecting at least one image which is the most significant one for the purposes of determining the number of pallets of said load from the sequence of images of the framed scene, which were acquired by said side detection means,
  - identifying the presence of one or more pallets in said image thus selected by searching for the portions corresponding to the side openings provided in each of them,
  - determining the number of pallets which form said load, according to the determinations made on the portions thus identified.

Advantageously, that portions of substantially rectangular shape are sought in said image thus selected and the dimensions of said portions and the distances between them are calculated in order to determine the presence and/or number of pallets.

Advantageously, said software program comprises a software module for automatically identifying the presence of handling in the work area according to the acquisitions made by said side detection means.

Advantageously, said software module receives the sequences of images acquired by said side detection means and is configured to compare in real time each of said images with a reference image which frames the empty work area and to store the images and/or data acquired by said detection means when the difference between the compared images exceeds the preset threshold.

Advantageously, said software program comprises a software module configured to recognize the presence of one or more loads to be analyzed and the presence of one or more carriers and/or operators in the selected image, and/or in the images acquired by said detection means.

Advantageously, in order to select a single image which is the most significant for the purposes of determining the number of pallets of said load from the sequence of images of the framed scene which were acquired by said side detection means, said software comprises a software module which is configured for:

- analyzing all the images which were acquired and stored during the passage of the load, so as to automatically associate to each one a score representative of the viewing quality of said load in each image,
- selecting the image which has the best score from all the images.

Advantageously, said software program comprises a segmentation software module configured to recognize and/or isolate the portion which corresponds to said load in the selected image, and/or in the images acquired by said detection means.

Advantageously, said segmentation software module is configured to recognize and/or isolate the portion of the image related to the carrier so as to separate it from the portion related to said load in the selected image and/or in the images acquired by said detection means.

Advantageously, the apparatus comprises means that are configured, starting from one or more of the acquired images, to recognize the type of the pallet or pallets present in said load and/or to verify the surface conditions thereof.

Advantageously, said software program loaded and run in the control and processing unit is configured to either interface with or be integrated in an enterprise resource planning program.

Advantageously, said software is configured to associate an identification code to each load which crosses the work area and of which the number of pallets of which it is formed is counted.

The present invention is further explained by means of some preferred embodiments given by way of non-limiting example only with reference to the accompanying drawings, in which:

| | |
|---|---|
| figure 1 | shows a perspective view of a first embodiment of the apparatus according to the invention with a first type of load, |
| figure 2 | shows the apparatus in the same view as fig. 1 with a different type of load, |
| figure 3 | shows a front view of a different embodiment, |
| figure 4 | shows a view from the top during the passage of a carrier which transports a load distributed in a first manner, |
| figure 5 | shows the view in fig. 4 with a load distributed in different manner, |
| figure 6 | shows a flow chart of the operations performed by the software modules of the apparatus according to the invention, |
| figures 7a - 7e | show a sequence of images acquired during the passage of a load, |
| figures 8a - 8b | show two images of the side surface of the load, respectively before and after recognizing the side openings provided in the pallets. |

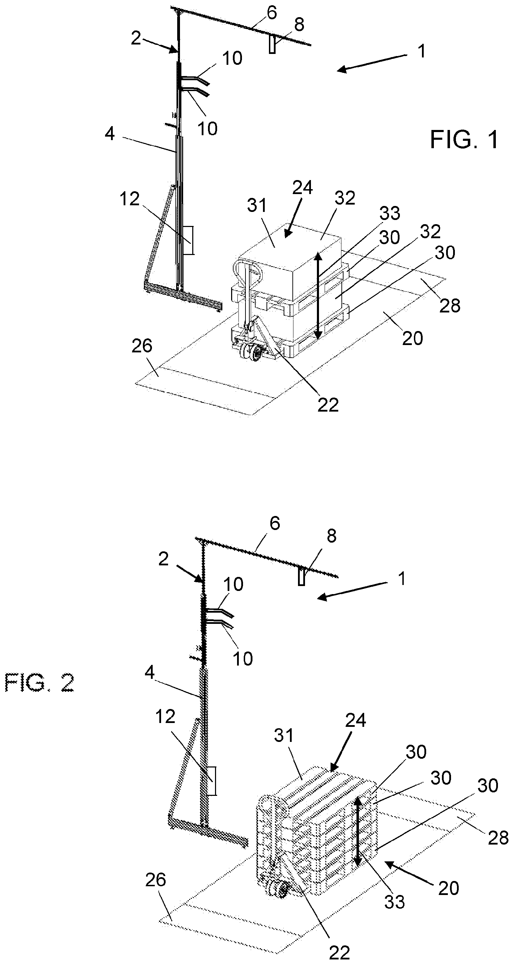

In the present invention, and in particular hereinafter, "load" 24 means one or more pallets 30 on which the material and/or the payload 32 to be transported is placed (cf. fig. 1), or a pallet 30 alone, but also a stack of pallets 30 (cf. fig. 2), with or without material and/or the payload 32 to be transported.

As shown in the figures, according to the invention and in order to determine the dimensions and/or volume of at least one moving load, the apparatus 1 comprises upper detection means 8, which are positioned so as to frame a work area 20 of a carrier 22, which handles a load 24, from the top and are configured to acquire a plurality of images of the objects and of the framed scene from the top and to acquire the distance (depth) in real time between the detection means themselves and the framed objects or scene.

These upper detection means 8 comprise one or more electronic devices for acquiring two-dimensional images in sequence and at least one sensor which provides its distance (depth) respect to the framed objects or scene, in real time. In particular, these detection means 8 output a series of two-dimensional images correlated with the depth information related to objects or to the scene captured in the corresponding image. Preferably, a value is associated to each pixel of the acquired image which represents the corresponding distance (depth) which was detected and defines the gray intensity of the pixel, if the image is a grayscale image, or the fundamental color intensity of the pixel itself, if the image is a color image.

Preferably, the upper detection means 8 comprise depth cameras, i.e. of the type adapted to construct depth maps and operate according to known principles, e.g. time of flight TOF (cf. e.g. US 2011/0317005 and US 8711206), of the offset or stereoscopic triangulation type (cf. e.g. US 8740794, US 8493496 and US 8150142). However, the means 8 may also comprise traditional cameras or optical sensors, i.e. not depth cameras or sensors, integrated with, and/or connected to appropriate depth sensors.

As mentioned, the upper detection means 8 are positioned so as to frame the work area 20 from the top, and in particular are positioned over the maximum height of the load 24 which may pass underneath and/or by the side of it. More in detail, the upper detection means 8 are positioned at a height from the floor comprised between 2 and 4 meters. Appropriately, the upper detection means 8 face downwards so as to be able to frame the upper surface 31 of the transiting load 24.

Preferably, in the apparatus 1 according to the invention, the upper detection means 8 may comprise a single image sensor (camera), preferably of the depth type, positioned over the load 24, however it is understood that such means may appropriately comprise even multiple cameras, in all cases always positioned over the load 24.

In particular, the work area 20 may be a loading bay and/or a transit and passage route which may appropriately connect a source site 26 to a destination site 28. For example, the transit route 20 may connect a container or a body of a truck to a warehouse or vice versa, or may connect two warehouses or even two different positions of the same warehouse to each other.

The upper detection means 8 may be mounted on an existing structure or preferably may be mounted on a load-bearing structure 2 specifically provided for such an application. Preferably, the load-bearing structure 2 may comprise a single upright 4 and only one crosspiece 6 (cf. fig. 1 and 2), or may comprise two uprights 4 joined by the upper end by a crosspiece 6 (cf. fig. 3). The load-bearing structure 2 may also only comprise an upright 4 or only two uprights 4, which mutually delimit the work area 20 for the load 24.

The height of the uprights 4 is higher than the maximum height of the load 24, which must be handled in that particular installation and that the carrier 22 keeps lifted from the ground sufficiently to transport it.

Advantageously, in case of presence of a load-bearing structure 2, the upper detection means 8 may be fitted on the crosspiece 6 and/or on the top of at least one upright 4 of said load-bearing structure 2.

Advantageously, the apparatus 1 also comprises side detection means 10 which are positioned so as to frame the work area 20 laterally. In particular, the side detection means 10 are configured to laterally acquire a plurality of images of the objects of the framed scene.

More in detail, the side detection means 10 comprise one or more image sensors (cameras), appropriately positioned at different heights and facing towards the work area 20. The side cameras 10 may be mounted either on the same upright 4 or on both uprights 4 of the load-bearing structure 2.

Advantageously, the side detection means 10 are also configured to acquire the distance (depth) between the means themselves and the framed scene. Preferably, the side detection means 10 may be of type described above for the upper detection means 8.

Appropriately, the acquisition frequency of the images and of the depth data by the upper 8 and/or side 10 detection means may be predetermined by the operator or the installer and is related to the specific needs of the latter, e.g. in terms of image resolution and on the basis of the transit speed of the transport vectors 22, and of the specific features of the cameras used.

The apparatus 1 also comprises a control and processing unit 12. More in detail, it comprises at least one processor, such a PC for example.

In particular, the upper 8 and/or side 10 detection means may be connected to a single control and central processing unit 12 of the apparatus 1 or may be connected to a control and processing unit 12 of its own, to which the other detection means provided in the apparatus itself can also be connected. Advantageously, the detection means 8 and 10 installed on the other load-bearing structures 2 can be connected to the control and processing unit 12 of a first load-bearing structure 2, which load-bearing structures may be appropriately fitted at the different loading bays of a warehouse or also along the transit routes 20 of the carriers 22 within them.

A software program 40 is loaded and run in the control and processing unit 12 and the depth data acquired by the upper 8 and/or the side 10 detection means.

Preferably, the software program 40 comprises a software module 50 for automatically identifying the presence of handling in the work area 20. In particular, the upper 8 and/or the side 10 detection means are always active and continuously acquire images of the scene at the work area 20.

The captured images are transmitted to the module 50, which is configured to compare each of said images with a reference image 51 which frames the empty work area (e.g. free from carriers, people, loads etc.) in real time. Appropriately, the reference image is acquired and stored during the step of calibrating of the apparatus 1.

When the difference between each acquired image and the reference image 51 exceeds a preset threshold, it means that there is a moving object in the work area 20, and so the software module 50 stores the images captured by the upper 8 and/or the side 10 detection means, preferably in the unit 12 itself, so as to proceed with the subsequent processing thereof. On the contrary, if there are no differences between the acquired image and the reference image 51, such images are not stored.

Thus, the apparatus 1 appropriately does not need a further external device (e.g. a photocell) to create a trigger signal to start the acquisition by the corresponding detection means 8 and/or 10.

So, the acquired and stored images are analyzed in real time by a module 52 to detect the presence of one or more loads 24 to be analyzed. In particular, the module 52 is configured to discriminate whether the detected handling concerns a load 24, or also more loads 24, which must be analyzed or concerns a passage which must not be analyzed. For example, the passage of people through the work area 20 is recognized by searching the dimensional and/or shape features proper of people (e.g. the head and the arms) in the acquired and stored images. Appropriately, recognizing people also facilitates determining the carriers 22, in which the operator can be seen by the cameras.

Advantageously, the module 52 may use the images supplied also by only one of the detection means 8 and/or 10 provided in the apparatus 1.

The sequence of images 55 which were acquired by the detection means 8 and/or 10 throughout the step of passing of the load 24 at the apparatus 1, and which were appropriately stored in the control and processing unit 12, is sent to a software module 54 which is configured to select the most significant image 58 to be subjected to subsequent processing from these images. The most significant image is selected by using an appropriate criterion which is set on the basis of the type of information that is intended to be obtained from the image itself (e.g. related to the dimensions and/or volume of the load, or the number of pallets, etc.), as will be more apparent below.

In particular, the software module 54 is configured for:

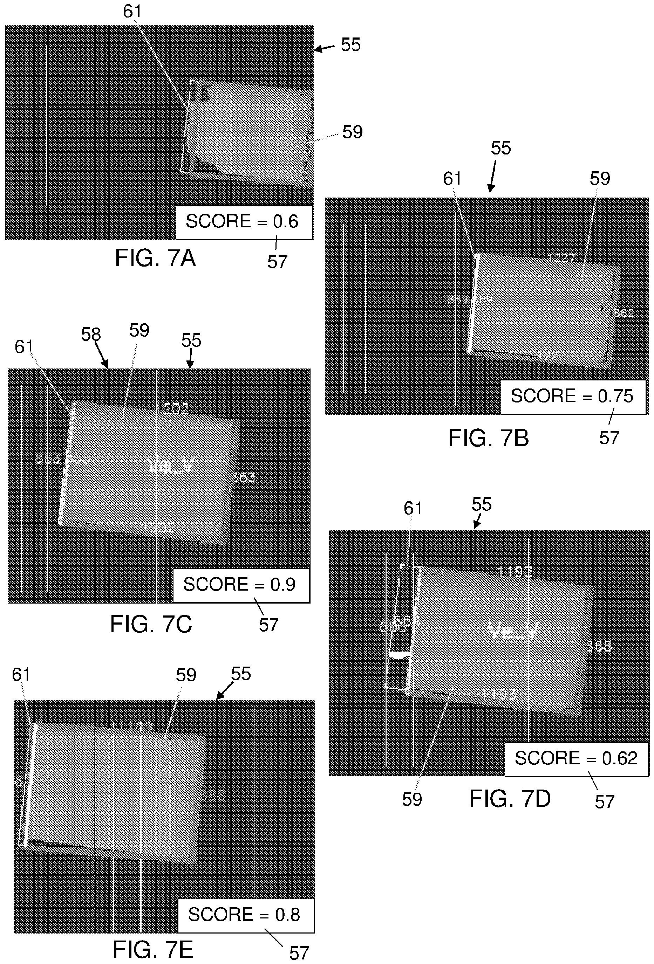

- analyzing all the images 55, which were acquired and stored during the passage of the load 24, so as to automatically associate a score representative of the viewing quality of the load 24 in each image to each one (cf. fig. 7a-7e),
- selecting the image 58 which has the best score, e.g. the highest, from all the images 55 (cf. fig. 7c).

Preferably, in order to identify the most significant image for the purpose of determining the dimensions and/or volume of the load 24, the score 57 to be associated to each image 55 is calculated as follows:

$$score = \frac{\text{actual area of the load}}{\text{area of the rectangle that circumscribes the load}}$$

where "actual area of the load" 59 means the one calculated on the basis of the content of each pixel of the portion of each image 55 in which the load is shown, while "area of the rectangle that circumscribes the load" means the area of the rectangle 61 that, in each image 55, circumscribes the load and is defined by the its maximum length and width.

The best score (i.e. the one closest to 1) is obtained the more the actual area of the load 59 approaches the area of the rectangle 61 circumscribing it (cf. fig. 7c). Appropriately, since the images 55 are images in which the value of each pixel represents the depth data, the best score is obtained by the image which has the highest number of pixels which relate to the load and the value of which is set using the corresponding depth data. In particular, such an image is obtained when the load 24 passes under the upper detection means 8 or when it is centered with respect to the side detection means 10.

Advantageously, to speed up processing, the software module 54 can be configured not to analyze and not to associate any score 57 to the first and the last images of the acquired image set 55 (because they are the ones which correspond to the beginning or the end of the passage of the load through the work area 20) and/or to those in which the load 24 and/or the carrier 22 (cf. fig. 7a) is not completely identified, using traditional image and *pattern recognition* processing techniques.

The software program 40 also comprises a further segmentation module 56 configured to distinguish and/or isolate the areas of interest (and i.e. the areas concerning only the load 24) from the areas not of interest, such as those which relate to the carrier 22 and/or to people transiting through the work area in the selected image 58 or in the acquired and stored images 55.

Appropriately, the software segmentation module 56 may be run on all acquired and stored images 55, i.e. before the software module 54 for selecting the best image, and/or may be run downstream thereof, i.e. only on the selected image 58.

In particular, the segmentation software module 56 may be configured to identify the carrier 22 in an image, e.g. by recognizing some constructive features of the carrier itself, such as for example the height of the resting plane of electric hand pallet trucks and their relative position with respect to the operator driving it.

Appropriately, if the relative position between the carrier 22 and the corresponding transported load 24 is fixed and predetermined (e.g. by setting a particular operative passage mode through the work area 20), the segmentation software module 56 is configured to determine firstly the direction of advancement of the carrier and then to calculate its contours, the relative position set between the carrier 22 and the load 24 being equal. Advantageously, such a solution makes it possible to avoid the application of particular markers to the carrier 22 to separate it from the load 24 to be detected.

Appropriately, a database 53 in which the distinctive features of the various types of carriers 22 are stored may be provided. So, during the step of processing of the acquired images, the module 56 may be configured to compare the acquired images with those stored in the database 53 in order to identify the carrier 22 to isolate the load 24, the dimensions and/or the volume of which are to be determined, and/or the presence and/or number of pallets 30 included in which are to be determined, therefrom.

Advantageously, the information related to carriers 22, which is stored in the database 53, may be entered and/or updated during the passages of the carriers through the work area 20, with or without the load to be detected. This is particularly advantageous if there are multiple simultaneous passages of carriers 22 through the work area 20, e.g. in the case of a carrier 22 with a load 24 which enters into a container and at the same time a carrier 22 which exits from the container itself.

So, once that the load 24 has been identified and segmented in the selected image 58 (i.e. isolated from the other elements which are not of interest, e.g. carrier 22, operators, etc.), the image itself may be sent to the software module 60 for determining its dimensions and/or volume.

The software module 60 receives the image 58, which was selected by the module 54 from those acquired by the upper detection means 8 and in which the portion corresponding to the upper surface 31 of the load 24 was identified and appropriately isolated. Furthermore, the software module 60 also receives the depth data related to the selected image 58, which were acquired by the upper detection means 8 and correspond to the distance between them and the upper surface 31 of the load 24.

In particular, the software module 60 is configured to process the selected image 58 and to identify the edges of the upper surface 31 of the load 24 in order to thus determine its dimensions (length and width), its perimeter and/or the area.

Furthermore, the software module 60 uses the corresponding depth data of the selected image 58. In particular, on the basis of the depth data related to the distance between the upper surface 31 of the load 24 and the upper detection means 8, and the distance of such means 8 respect to the floor being known, the software module 60 determines the maximum height 33 of the load 24, which corresponds to the distance between the upper surface 31 of the load 24 and the floor.

So, once the upper surface area 31 of the load 24 and its maximum height 33 have been determined, the software module 60 determines the maximum volume (dimension) of the load itself. Appropriately, the fact that the upper detection means 8 acquire an image of the load 24 from the top makes it possible to determine the volume of the load 24 also considering the possible overflow present in it.

Advantageously, the software module 60 may be configured to divide the upper surface of the load 24, as it was identified in the selected image 58, into a plurality of subareas (of known width and length) so that the volume of the load 24 is calculated considering the heights of the single subareas. Appropriately, only the subareas to which corresponding depth data are associated near the edges of the load 24 are considered. Substantially, the corresponding volume is calculated for each subarea by using the depth data acquired by the upper detection means 8, with methods similar to those described above. Then, data representative of the actual volume of the load is obtained by adding up all the volumes of the subareas, and this is useful in particular if the load is not uniformly distributed at its upper surface 31. Appropriately, the height values of each subarea also make it possible to obtain the envelope of the upper surface of the load 24, and to determine the maximum, minimum and average height thereof.

Advantageously, in manner substantially corresponding to that presented above, the images acquired by means of the side detection means 10 are also inputted to the software module 40 to be processed one by one by the software modules 50, 52, 54 and 56. In particular, from the sequence of images acquired by each side detection means 10, the software module 54 appropriately selects the most significant image in manner substantially similar to that described above. Furthermore, the segmentation software module 56 is appropriately configured to identify and isolate the area of interest related to the load 24 in the images acquired by the side detection means 10 and/or in the one selected by the module 54.

Appropriately, the side detection means 10 are positioned and configured so as to acquire the images of the side and/or front and/or rear surfaces of the load 24, from which it is thus possible to recognize the composition thereof and this in order to recognize whether the load comprises a single pallet 30 or a stack of pallets 30, and to recognize whether the load 24 is formed by multiple loaded pallets or multiple empty pallets or by multiple pallets which are partially loaded and partially empty.

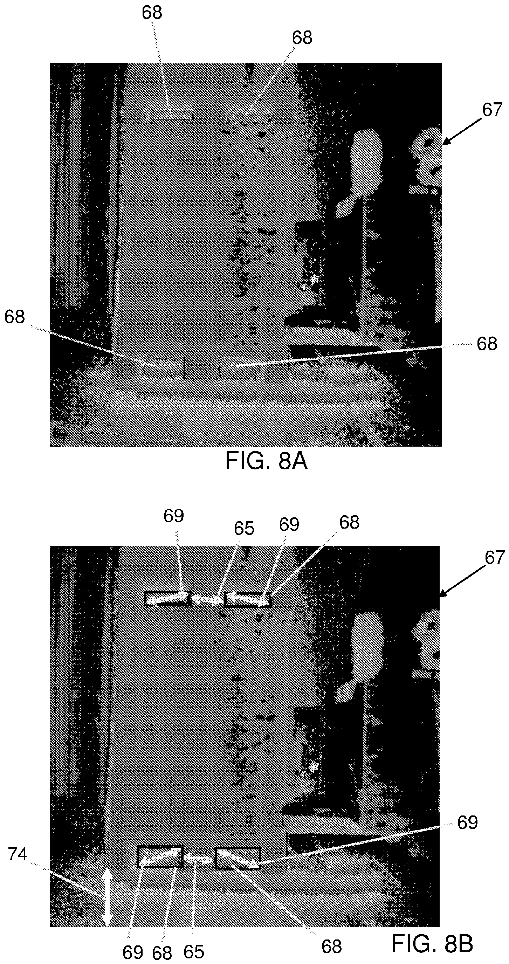

In particular, the image 67 (cf. fig. 8a), which is selected by the software module 54 from those acquired by the side detection means 10, is inputted into a software module 70 to determine the presence and the number (count) of the pallets 30 which form the load 24. More in detail, the software module 70 is configured to identify the pallets present in the image 67 in order to determine the number of pallets forming the load itself. More in detail, the number of pallets 30 forming the load 24 are counted by identifying the portions corresponding to the side openings 68 of the pallet in the selected image 67 and then calculating their dimensions 69 and/or their distance 65 (cf. fig. 8b). Indeed, the dimensions and distances between the side openings of pallets (and their distribution or shape) is fixed and known, and thus it is possible to identify the presence of one or more pallets 30 in the image itself by identifying the portions of substantially rectangular shape in the acquired laterally image 67 and by determining the dimensions 69 thereof as well as the distance 65.

Appropriately, the image 67, which was acquired by the side detection means 10 and appropriately selected by the software module 54, may be inputted into a software module 72 which is configured to obtain the height 74 from the lower surface of the load 24 with respect to the floor on the basis of such an image. Advantageously, the height 74 thus calculated is sent to the software module 60 in order to improve the determination accuracy of the height and of the volume of the load 24, obtained only by using the images and the depth data acquired by means of the upper detection means 8. Indeed, advantageously, the actual height of the load may be appropriately determined by subtracting the height 74 of the lower surface of the load 24 from the floor from the maximum height 33. In particular, if the carrier 22 is a fork-lift truck, the load 24 is lifted from the ground by a height which varies from pallet to pallet, and thus the accuracy of the calculation of the two values is increased by determining and considering this type of offset in the total count of the height and volume of the load 24.

Alternatively, the height 74 of the load respect to the floor may also be determined using alternative devices to the side detection means 10, such as for example a laser triangulation system or system with laser scanner.

Advantageously, the software module 72 is also configured to determine the inclination 75 of the load 24 respect to its correct vertical arrangement on the basis of the image 67 selected from those acquired by the side detection means 10. In particular, in the case for example of a fork-lift truck and above all of very tall loads 24, the operator tends to incline the load itself backwards for safety reasons in order to prevent it from falling. Advantageously, also in this case, the information concerning the inclination 75 of the load 24 thus determined is sent to the module 60 to be appropriately considered as offset for calculating and determining the actual height and volume of the load itself, thus increasing the calculation accuracy thereof.

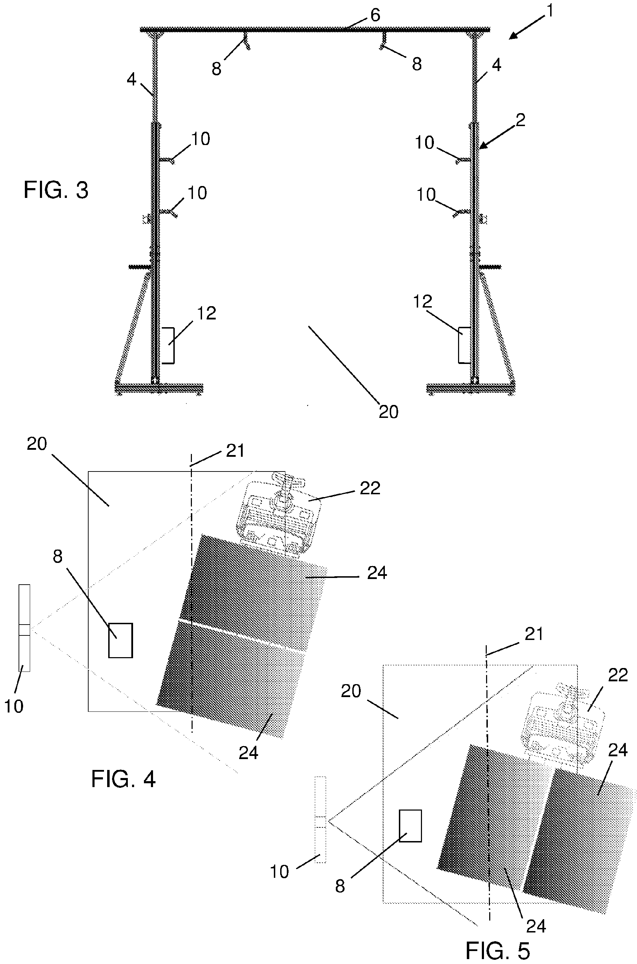

In order to simplify and speed up images and/or data processing by the software modules 40 loaded and run on the control and processing unit 12, the direction of advancement of the carrier 22 with the load 24 should preferably form an angle substantially smaller than 30° with axis 21 of the work area 20 (cf. fig. 4 and 5).

Advantageously, the apparatus 1 according to the invention also makes it possible to determine the dimensions and/or the volume of at least two loads 24 which are transported by different carriers 22 and which cross the work area 20 at the same time even in different directions. Indeed, the upper detection means 8 are arranged to acquire images, in which two loads 24 are represented, so as to calculate the corresponding dimensions and volume in the manner described above.

For example, at each loading bay of a warehouse there could be a structure 2 with two uprights 4, 4' mutually distanced so as to allow the simultaneous passage of two carriers 22 in opposite directions under them, i.e. of a carrier 22 advancing towards a truck or a container to load it and other empty carrier 22 which exits from the truck or container after having loaded it. Advantageously, in this case, the pallets 30 are counted by using the images acquired by the side detection means 10 installed on the upright 4, near which the carriers 22 pass with the respective loads. Obviously, in the case of side detection means 10 installed on both uprights 4, 4', the carriers 22 with the respective loads may pass near both uprights 4, 4' of the structure 2.

Advantageously, the apparatus 1 according to the invention makes it possible to easily determine the dimensions and/or volume of at least two loads arranged side-by-side which are transported by a single carrier 22 (cf. fig. 4 e 5). Appropriately in order to allow the detection of both loads 24 transported by the same carrier 22, the upper detection means 8 are arranged to acquire images in which both loads 24, are represented in order to calculate the corresponding dimensions and the corresponding volumes according to the methods described above in this manner. More in detail, in the selected image 58, once the dimensions of the concerned area have been identified and it has been found that in light of such dimensions multiple loads 24 are present side-by-side, the software 40 identifies the separation zone between the two loads in the image itself and determines the perimeter of the single load by searching the contours. The previously described operations are subsequently performed to determine the height and the volume.

Appropriately, the software 40 may also comprise a software module 76 configured to obtain a planarity index of the upper surface of the pallet 30 from the images and/or data acquired by the upper detection means 8. In particular, the planarity is determined by analyzing the height variation of the upper surface 31 of the load 24 on the basis of depth information acquired by means of the upper detection means 8. More in detail, the height variations are analyzed by comparing the height values of the micro areas in which the upper surface 31 of the load is divided. Such information makes it possible to establish whether further pallets 30 can be appropriately superimposed over the upper surface of the load 24 in order to optimize the number of pallets to be loaded on a same carrier 22.

Substantially, the software program 40 loaded and run by the control unit 12 can output one or more of the following parameters:

- width and length of the load 24,
- maximum 33, medium and/or minimum height of the load 24,
- height 74 from the ground of the load 24 and the actual height of the load 24,
- maximum volume of the load 24, i.e. the volume of parallelepiped which contains the load,
- actual volume of the load 24,
- planarity index of the upper surface 31 of the load 24,
- presence and/or number of pallets 30 present in the load 24,
- dimensions of each pallet 30 present in the load 24.

Advantageously, the apparatus 1 is modular and includes the possibility of using one or more additional high-resolution cameras and/or an appropriate software module in order to recognize the pallet type starting from the acquired images, e.g. in order to discriminate whether the load comprises an EPAL type pallet or a disposable pallet. More in detail, the type of pallet 30 may be recognized by identifying the specific brand that distinguishes it (EPAL, UIC, etc.) by means of pattern match or optical character recognition (OCR) algorithms.

Appropriately, by using the images acquired by such additional cameras, it is also possible to verify the conditions of the wooden surfaces of the pallet 30, in order to detect possible damage thereof.

Appropriately, the software program 40 is configured to process the depth data acquired by the detection means 8 and 10 separately from the corresponding images acquired thereby, so that the subsequent processing of the two-dimensional images, e.g. aimed at detecting the edges of the objects present, do not cause any distortion of the depth data; however, the association is always maintained between each image and the corresponding depth data in order to use it appropriately as described above in the module 60 for determining the dimensions and/or the volume of the load 24.

It is also understood that the software modules 40, described above, in order to recognize the load 24, and/or the carrier 22 and/or the operators and/or possible other objects or parts thereof, use traditional image processing techniques and algorithms, such as for example pattern match algorithms for recognizing the objects by determining some particular features thereof by means of appropriate artificial intelligence algorithms (machine learning, artificial intelligence, neutral networks, etc.).

Appropriately, the apparatus 1 may comprise a display, not shown, to view the parameter values output by the software 40.

Appropriately, the software 40 loaded on the central and processing unit 12 can interface or be integrated in the enterprise resource planning program 90 so as to allow the information output by the software 40 to be immediately used.

The software 40 can be also configured to associate a univocal identification code to each single load 24, of which an image was acquired by means of the upper 8 and/or the side 10 detection means and of which the dimensions, volume and/or other information were determined. For example, the operator can read the barcode associated to the load 24 before it enters into the work area 20 by means of an appropriate instrument; the read code is then transferred to the control and processing unit 12, which is associated thus to the data calculated and determined by the software program itself by means of the software program 40; appropriately when all the loads of the same shipment have been measured, the processing and control unit 12 sends all the results associated to the corresponding codes to the enterprise resource planning program 90. It is also understood that the association between barcodes and performed measurements may be performed by the enterprise resource planning program 90 present in the facility.

Advantageously, the barcode may be read by means of a traditional manual reader or automatically by means of RFID or by means of cameras configured to automatically recognize the characters of the code applied to the load (obviously, the barcode must be positioned on the visible side of the load in this case).

From the above, it results that the apparatus according to present invention is more advantageous than traditional apparatuses because:

- it makes it possible to calculate the linear dimensions of one or more loads and the corresponding volume simply and in real time without using particularly powerful or costly hardware,
- it makes it possible to count the number of pallets present in the load simply and in real time,
- it does not require integrating a plurality of images in order to construct a high-resolution 3D model to accurately calculate the volume of the moving load,
- it makes it possible to improve the determination accuracy of the height and/or volume of the load by appropriately using information related to the height from the ground of the lower surface of the pallet itself,
- it does not require any changes to the carriers, and in particular does not required to enter or associate recognizable targets to them.

**Claims**

1. An apparatus (1) for determining the dimensions of at least one load (24) moving across a work area (20) by means of a carrier (22), preferably of at least one load (24) which comprises at least one pallet (30) handled by a carrier (22) across said work area (20), said dimensions comprising length and width of said load (24) and the maximum height (33) of the load (24) corresponding to the distance between the upper surface (31) of the load (24) and the floor, **characterized in that** it comprises:

   - upper detection means (8), which are positioned so as to frame said work area (20) from the top and which are configured to acquire a sequence of images (55) of the framed scene from the top and to acquire depth data of the elements present in said framed scene, said upper detection means (8) are positioned higher than the maximum predictable height of the load handled by said carrier (22) and configured to acquire a plurality of images from the top, in which at least the upper surface (31) of said load (24) is represented, and to acquire the distance between the means themselves and the upper surface (31) of said load (24) in real time, said upper detection means (8) comprise at least one image and one depth sensor,
   - at least one control and processing unit (12), which is connected to said upper detection means (8) and in which a software program (40) is loaded configured for:

      - selecting at least one significant image (58) for the purpose of determining the dimensions of said load (24) from the sequence of images (55) of the framed scene which were acquired by said detection means (8),
      - identifying the portion corresponding to the upper surface (31) of said load (24) in said image (58) thus selected,
      - determining the length and the width of said load (24) on the basis of the length and the width of the edges of the upper surface (31) of the load (24) detected in said portion thus identified, and determining the maximum height of the load (24) on the basis of the depth data associated to the selected image (58) and related to the distance between the upper surface (31) of the load (24) and the upper detection means (8), and on the basis of the known distance of such means (8) respect to the floor,

and further **characterized in that** said software program (40):

- comprises a segmentation software module (56) configured to recognize the portion which corresponds to said load (24) in the selected image (58) or all images (55) acquired by said detection means (8), said segmentation software module (56) being configured to recognize, in the selected image (58) or all images (55) acquired by said detection means (8), the portion of the image related to the carrier (22), so as to separate it from the portion related to said load (24).

2. An apparatus according to one or more of the preceding claims, **characterized in that** said software program (40) is configured for determining the perimeter and the area of the upper surface of the load (24), on the basis of the length and the width of said portion thus identified.

3. An apparatus according to one or more of the preceding claims, **characterized in that** said software program (40) is also configured to determine the volume of said load (24) by using the previously determined area and the height of the upper surface of the load (24).

4. An apparatus according to one or more of the preceding claims, **characterized in that** said software program (40) comprises a software module (60) configured for:

- dividing the upper surface of the load (24), as it was identified in the selected image (58), into a plurality of sub-areas of known dimensions,
- calculating the volume of the load below each sub-area by using the corresponding depth data associated to the selected image (58), and
- integrating the volume of each sub-area thus calculated to obtain the actual volume of said load (24).

5. An apparatus according to one or more of the preceding claims, **characterized in that** said software program (40) comprises a software module (60) configured for:

- dividing the upper surface of the load (24), as it was identified in the selected image (58), into a plurality of sub-areas of known dimensions,
- determining the maximum, minimum and/or average height of the load (24) and/or the envelope of the upper surface (31) of the load itself, on the basis of the corresponding depth area associated to the selected image (58) and relative to each of said sub-areas.

6. An apparatus according to one or more of the preceding claims, **characterized in that** it comprises side detection means (10), which are positioned so as to frame said work area (20) laterally in order to acquire a sequence of images of the side surfaces of said moving load (24), said at least one control and processing unit (12) being connected to said side detection means (10).

7. An apparatus according to one or more of the preceding claims, **characterized in that** it comprises a load-bearing structure (2) on which said upper detection means (8) are installed, said load-bearing structure (2) comprising:

- at least one upright (4) positioned at said work area (20), or
- an upright (4) positioned at said work area (20) and a crosspiece (6) associated on top of said upright (4), or
- a crosspiece (6) associated on top to two uprights (4), which mutually delimit said work area (20) and which are preferably joined by said crosspiece (6).

8. An apparatus according to claim 6, **characterized in that**, in order to determine the presence and/or number of pallets (30) which form said at least one load (24) which is handled by said carrier (22) across said work area (20), **characterized in that** said software program (40) is also configured for:

- selecting at least one image (67), which is the most significant for the purposes of determining the presence and/or number of pallets (30) of said load (24), from the sequence of images acquired by said side detection means (10),
- determining the presence and/or the number of pallets (30) which form said load (24) by identifying the portions corresponding to the side openings provided in each pallet (30) in the image thus selected (58).

9. An apparatus according to one or more of the preceding claims, **characterized in that** said software program (40) comprises a software module (50) for automatically identifying the presence of a movement in the work area (20) on the basis of the acquisitions made by said upper means (8).

10. An apparatus according to one or more of the preceding claims, **characterized in that** said software module (50) receives the sequence of images acquired by said upper detection means (8) and is configured to compare in real time each of said images with a reference image (51) which frames the empty work area and to store the images acquired by said upper detection means (8) when the difference between the compared images exceeds a preset threshold.

11. An apparatus according to one or more of the preceding claims, **characterized in that** said software program (40) comprises a software module (52) configured to recognize the presence of one or more loads (24) to be analyzed and the presence of one or more carriers (22) and operators in the selected image (58) or all images acquired by said detection means (8 and/or 10).

12. An apparatus according to one or more of the preceding claims, **characterized in that** in order to select a single image from the sequence of images of the framed scene which were acquired by said detection means (8 and/or 10), a single image which is the most significant one for the purposes of determining the dimensions and/or the volume of at least one load (24) and/or for the purposes of determining the number of pallets of said load (24), said software program (40) comprises a software module (54) which is configured for:

- analyzing all the images (55) which were acquired and stored during the passage of the load (24), so as to automatically associate a score representative of the viewing quality of said load (24) in each image to each one,
- selecting the image (58) which has the best score, from all the images (55).

13. An apparatus according to one or more of the preceding claims, **characterized in that** said software program (40) comprises a software module (72) configured to obtain the height (74) of the lower surface of the load (24) from the floor and/or the inclination (75) of the load respect to its correct vertical arrangement on the basis of at least one image obtained by said side detection means (10) and **in that** said software module (60) is configured to determine the actual height of the load (24) using the height data (74) of the lower surface of the load (24) from the floor and/or the inclination data (75) of the load respect to its corresponding vertical arrangement, said data being determined by said software module (72).

14. An apparatus according to one or more of the preceding claims, **characterized in that** said software program (40) comprises a software module (76) configured to determine a planarity index of the upper surface (31) of the load (24) by using the images and/or the depth data which concern the surface itself and which were acquired by said upper detection means (8).

15. An apparatus according to one or more of the preceding claims, **characterized in that** it comprises means that are configured, starting from one or more of the acquired images, to recognize the type of the pallet or pallets (30) present in said load (24) and/or to verify the surface conditions thereof.

**Patentansprüche**

1. Vorrichtung (1) zum Bestimmen der Abmessungen von mindestens einer Last (24), die sich mittels eines Trägers (22) über einen Arbeitsbereich (20) hinweg bewegt, vorzugsweise von mindestens einer Last (24), die mindestens eine Palette (30) umfasst, die durch einen Träger (22) über den Arbeitsbereich (20) hinweg befördert wird, die Abmessungen umfassend Länge und Breite der Last (24) und die maximale Höhe (33) der Last (24), die dem Abstand zwischen der Oberseite (31) der Last (24) und dem Boden entspricht, **dadurch gekennzeichnet, dass** sie umfasst:

- obere Detektionsmittel (8), die angeordnet sind, um den Arbeitsbereich (20) von oben einzurahmen, und die dazu ausgelegt sind, eine Sequenz von Bildern (55) der eingerahmten Szene von oben zu erfassen und um Tiefendaten der in der eingerahmten Szene vorhandenen Elemente zu erfassen, wobei die oberen Detektionsmittel (8) höher als die maximale vorhersehbare Höhe der Last, die durch den Träger (22) befördert wird, angeordnet sind und dazu ausgelegt sind, eine Vielzahl von Bildern von oben zu erfassen, in denen mindestens die Oberseite (31) der Last (24) dargestellt ist, und den Abstand zwischen den Mitteln selbst und der Oberseite (31) der Last (24) in Echtzeit zu erfassen, wobei die oberen Detektionsmittel (8) mindestens einen Bild- und einen Tiefensensor umfassen,
- mindestens eine Steuer- und Verarbeitungseinheit (12), die mit den oberen Detektionsmitteln (8) verbunden ist und in der ein Softwareprogramm (40) geladen ist, ausgelegt zum:

- Auswählen von mindestens einem signifikanten Bild (58) zum Zweck des Bestimmens der Abmessungen der Last (24) aus der Sequenz von Bildern (55) der eingerahmten Szene, die durch die Detektionsmittel (8) erfasst wurden,
- Identifizieren des Abschnitts, der der Oberseite (31) der Last (24) in dem so ausgewählten Bild (58) entspricht,
- Bestimmen der Länge und der Breite der Last (24) auf Basis der Länge und der Breite der Kanten der Oberseite (31) der Last (24), die in dem so identifizierten Abschnitt detektiert wurde, und Bestimmen der maximalen Höhe der Last (24) auf Basis der Tiefendaten in Verbindung mit dem ausgewählten Bild (58) und in Bezug auf den Abstand zwischen der Oberseite (31) der Last (24) und den oberen Detektionsmitteln (8) und auf Basis des bekannten Abstands dieser Mittel (8) bezogen auf den Boden,

und ferner **dadurch gekennzeichnet, dass** das Softwareprogramm (40):

- ein Segmentierungssoftwaremodul (56) umfasst, das dazu ausgelegt ist, den Abschnitt zu erkennen, der der Last (24) in dem ausgewählten Bild (58) oder allen Bildern (55), die durch die Detektionsmittel (8) erfasst werden, entspricht, wobei das Segmentierungssoftwaremodul (56) dazu ausgelegt ist, in dem ausgewählten Bild (58) oder allen Bildern (55), die durch die Detektionsmittel (8) erfasst werden, den Abschnitt des Bilds in Bezug auf den Träger (22) zu erkennen, um ihn von dem Abschnitt in Bezug auf die Last (24) zu trennen.

2. Vorrichtung nach einem oder mehreren der vorhergehenden Ansprüche, **dadurch gekennzeichnet, dass** das Softwareprogramm (40) dazu ausgelegt ist, den Umfang und die Fläche der Oberseite der Last (24) auf Basis der Länge und der Breite des so identifizierten Abschnitts zu bestimmen.

3. Vorrichtung nach einem oder mehreren der vorhergehenden Ansprüche, **dadurch gekennzeichnet, dass** das Softwareprogramm (40) außerdem dazu ausgelegt ist, das Volumen der Last (24) durch Verwenden der zuvor bestimmten Fläche und der Höhe der Oberseite der Last (24) zu bestimmen.

4. Vorrichtung nach einem oder mehreren der vorhergehenden Ansprüche, **dadurch gekennzeichnet, dass** das Softwareprogramm (40) ein Softwaremodul (60) umfasst, das ausgelegt ist zum:

- Teilen der Oberseite der Last (24), wie sie in dem ausgewählten Bild (58) identifiziert wurde, in eine Vielzahl von Teilbereichen von bekannten Abmessungen,
- Berechnen des Volumens der Last unter jedem Teilbereich durch Verwenden der entsprechenden Tiefendaten in Verbindung mit dem ausgewählten Bild (58) und
- Integrieren des Volumens jedes so berechneten Teilbereichs, um das tatsächliche Volumen der Last (24) zu erhalten.

5. Vorrichtung nach einem oder mehreren der vorhergehenden Ansprüche, **dadurch gekennzeichnet, dass** das Softwareprogramm (40) ein Softwaremodul (60) umfasst, das ausgelegt ist zum:

- Teilen der Oberseite der Last (24), wie sie in dem ausgewählten Bild (58) identifiziert wurde, in eine Vielzahl von Teilbereichen von bekannten Abmessungen,
- Bestimmen der maximalen, minimalen und/oder durchschnittlichen Höhe der Last (24) und/oder der Hülle der Oberseite (31) der Last selbst auf Basis des entsprechenden Tiefenbereichs in Verbindung mit dem ausgewählten Bild (58) und bezogen auf jeden der Teilbereiche.

6. Vorrichtung nach einem oder mehreren der vorhergehenden Ansprüche, **dadurch gekennzeichnet, dass** sie seitliche Detektionsmittel (10) umfasst, die angeordnet sind, um den Arbeitsbereich (20) seitlich einzurahmen, um eine Sequenz von Bildern der Seitenoberflächen der sich bewegenden Last (24) zu erfassen, wobei die mindestens eine Steuer- und Verarbeitungseinheit (12) mit den seitlichen Detektionsmitteln (10) verbunden ist.

7. Vorrichtung nach einem oder mehreren der vorhergehenden Ansprüche, **dadurch gekennzeichnet, dass** sie eine lasttragende Struktur (2) umfasst, an der die oberen Detektionsmittel (8) installiert sind, die lasttragende Struktur (2) umfassend:

- mindestens einen Ständer (4), der an dem Arbeitsbereich (20) angeordnet ist, oder
- einen Ständer (4), der an dem Arbeitsbereich (20) angeordnet ist, und ein Querstück (6), das an der Oberseite des Ständers (4) verbunden ist, oder
- ein Querstück (6), das an der Oberseite mit zwei Ständern (4) verbunden ist, die miteinander den Arbeitsbereich (20) begrenzen und die vorzugsweise durch das Querstück (6) zusammengefügt sind.

**8.** Vorrichtung nach Anspruch 6, **dadurch gekennzeichnet, dass** zum Bestimmen des Vorhandenseins und/oder der Anzahl von Paletten (30), die die mindestens eine Last (24) bilden, die durch den Träger (22) über den Arbeitsbereich (20) hinweg befördert wird, das Softwareprogramm (40) **dadurch gekennzeichnet ist, dass** es auch ausgelegt ist zum:

- Auswählen von mindestens einem Bild (67), das das signifikanteste für die Zwecke des Bestimmens des Vorhandenseins und/oder der Anzahl von Paletten (30) der Last (24) ist, aus der Sequenz von Bildern, die durch die seitlichen Detektionsmittel (10) erfasst werden,
- Bestimmen des Vorhandenseins und/oder der Anzahl von Paletten (30), die die Last (24) bilden, durch Identifizieren der Abschnitte, die den in jeder Palette (30) bereitgestellten Seitenöffnungen entsprechen, in dem so ausgewählten Bild (58).

**9.** Vorrichtung nach einem oder mehreren der vorhergehenden Ansprüche, **dadurch gekennzeichnet, dass** das Softwareprogramm (40) ein Softwaremodul (50) zum automatischen Identifizieren des Vorhandenseins einer Bewegung in dem Arbeitsbereich (20) auf Basis der durch die oberen Mittel (8) durchgeführten Erfassungen umfasst.

**10.** Vorrichtung nach einem oder mehreren der vorhergehenden Ansprüche, **dadurch gekennzeichnet, dass** das Softwaremodul (50) die Sequenz von Bildern, die durch die oberen Detektionsmittel (8) erfasst werden, empfängt und dazu ausgelegt ist, in Echtzeit jedes der Bilder mit einem Referenzbild (51), das den leeren Arbeitsbereich einrahmt, zu vergleichen und die Bilder, die durch die oberen Detektionsmittel (8) erfasst werden, zu speichern, wenn der Unterschied zwischen den verglichenen Bildern einen vorgegebenen Schwellenwert überschreitet.

**11.** Vorrichtung nach einem oder mehreren der vorhergehenden Ansprüche, **dadurch gekennzeichnet, dass** das Softwareprogramm (40) ein Softwaremodul (52) umfasst, das dazu ausgelegt ist, das Vorhandensein von einer oder mehreren zu analysierenden Lasten (24) und das Vorhandensein von einem oder mehreren Trägern (22) und Bedienern in dem ausgewählten Bild (58) oder allen Bildern, die durch die Detektionsmittel (8 und/oder 10) erfasst werden, zu erkennen.

**12.** Vorrichtung nach einem oder mehreren der vorhergehenden Ansprüche, **dadurch gekennzeichnet, dass** zum Auswählen eines einzelnen Bilds aus der Sequenz von Bildern der eingerahmten Szene, die durch die Detektionsmittel (8 und/oder 10) erfasst wurden, eines einzelnen Bilds, das das signifikanteste für die Zwecke des Bestimmens der Abmessungen und/oder des Volumens von mindestens einer Last (24) und/oder für die Zwecke des Bestimmens der Anzahl von Paletten der Last (24) ist, das Softwareprogramm (40) ein Softwaremodul (54) umfasst, das ausgelegt ist zum:

- Analysieren aller Bilder (55), die während des Durchgangs der Last (24) erfasst und gespeichert wurden, um automatisch jedem Bild eine Bewertung, die für die Anzeigequalität der Last (24) in jedem Bild repräsentativ ist, zuzuordnen,
- Auswählen des Bilds (58), das die beste Bewertung aufweist, aus allen Bildern (55).

**13.** Vorrichtung nach einem oder mehreren der vorhergehenden Ansprüche, **dadurch gekennzeichnet, dass** das Softwareprogramm (40) ein Softwaremodul (72) umfasst, das dazu ausgelegt ist, die Höhe (74) der Unterseite der Last (24) vom Boden und/oder die Neigung (75) der Last in Bezug auf ihre korrekte vertikale Anordnung auf Basis von mindestens einem Bild, das durch die seitlichen Detektionsmittel (10) erhalten wird, zu erhalten, und dadurch, dass das Softwaremodul (60) dazu ausgelegt ist, die tatsächliche Höhe der Last (24) unter Verwendung der Höhendaten (74) der Unterseite der Last (24) vom Boden und/oder der Neigungsdaten (75) der Last in Bezug auf ihre entsprechende vertikale Anordnung zu bestimmen, wobei die Daten durch das Softwaremodul (72) bestimmt werden.

**14.** Vorrichtung nach einem oder mehreren der vorhergehenden Ansprüche, **dadurch gekennzeichnet, dass** das Softwareprogramm (40) ein Softwaremodul (76) umfasst, das dazu ausgelegt ist, einen Ebenflächigkeitsindex der Oberseite (31) der Last (24) durch Verwenden der Bilder und/oder der Tiefendaten, die die Oberfläche selbst betreffen und die durch die oberen Detektionsmittel (8) erfasst wurden, zu bestimmen.

15. Vorrichtung nach einem oder mehreren der vorhergehenden Ansprüche, **dadurch gekennzeichnet, dass** sie Mittel umfasst, die dazu ausgelegt sind, beginnend ab einem oder mehreren der erfassten Bilder, den Typ der Palette oder Paletten (30), die in der Last (24) vorhanden sind, zu erkennen und/oder die Oberflächenzustände davon zu verifizieren.

**Revendications**

1. Appareil (1) pour déterminer les dimensions d'au moins une charge (24) se déplaçant à travers une zone de travail (20) au moyen d'un support (22), de préférence d'au moins une charge (24) qui comprend au moins une palette (30) manipulée par un transporteur (22) à travers ladite zone de travail (20), lesdites dimensions comprenant la longueur et la largeur de ladite charge (24) et la hauteur maximale (33) de la charge (24) correspondant à la distance entre la surface supérieure (31) de la charge (24) et le sol, **caractérisée en ce qu'**elle comprend:

   - des moyens de détection supérieurs (8), qui sont positionnés de manière à cadrer ladite zone de travail (20) depuis le haut et qui sont configurés pour acquérir une séquence d'images (55) de la scène encadrée depuis le haut et pour acquérir des données de profondeur des éléments présents dans ladite scène encadrée, lesdits moyens de détection supérieurs (8) sont positionnés plus haut que la hauteur maximale prévisible de la charge manipulée par ledit support (22) et configurés pour acquérir une pluralité d'images depuis le haut, dans lesquelles au moins la partie supérieure la surface (31) de ladite charge (24) est représentée, et pour acquérir en temps réel la distance entre les moyens eux-mêmes et la surface supérieure (31) de ladite charge (24), lesdits moyens de détection supérieurs (8) comprennent au moins un capteur d'image et de profondeur,
   - au moins une unité de commande et de traitement (12), qui est connectée auxdits moyens de détection supérieurs (8) et dans laquelle un logiciel (40) est chargé configuré pour:

      - sélectionner au moins une image significative (58) en vue de déterminer les dimensions de ladite charge (24) à partir de la séquence d'images (55) de la scène encadrée acquises par lesdits moyens de détection (8),
      - identifier la partie correspondant à la surface supérieure (31) de ladite charge (24) dans ladite image (58) ainsi sélectionnée,
      - déterminer la longueur et la largeur de ladite charge (24) sur la base de la longueur et de la largeur des bords de la surface supérieure (31) de la charge (24) détectée dans ladite partie ainsi identifiée, et déterminer la hauteur maximale de la charge (24) sur la base des données de profondeur associées à l'image sélectionnée (58) et liées à la distance entre la surface supérieure (31) de la charge (24) et les moyens de détection supérieurs (8), et sur la sur la base de la distance connue de tels moyens (8) par rapport au sol,

   et **caractérisée en outre en ce que** ledit logiciel (40):

      - comprend un module de segmentation (56) configuré pour reconnaître la partie qui correspond à ladite charge (24) dans l'image sélectionnée (58) ou toutes les images (55) acquises par lesdits moyens de détection (8), ledit module de segmentation (56) étant configuré pour reconnaître, dans l'image sélectionnée (58) ou toutes les images (55) acquises par lesdits moyens de détection (8), la partie de l'image liée au support (22), de manière à la séparer de la partie liée à ladite charge (24).

2. Appareil selon une ou plusieurs des revendications précédentes, **caractérisé en ce que** ledit logiciel (40) est configuré pour déterminer le périmètre et l'aire de la surface supérieure de la charge (24), sur la base de la longueur et la largeur de ladite portion ainsi identifiée.

3. Appareil selon une ou plusieurs des revendications précédentes, **caractérisé en ce que** ledit logiciel (40) est également configuré pour déterminer le volume de ladite charge (24) en utilisant la zone précédemment déterminée et la hauteur de la surface supérieure de la charge (24).

4. Appareil selon une ou plusieurs des revendications précédentes, **caractérisé en ce que** ledit logiciel (40) comprend un module (60) configuré pour:

      - diviser la surface supérieure de la charge (24), telle qu'elle a été identifiée dans l'image sélectionnée (58), en une pluralité de sous-zones de dimensions connues,
      - calculer le volume de la charge en dessous de chaque sous-zone en utilisant les données de profondeur correspondantes associées à l'image sélectionnée (58), et

- intégrer le volume de chaque sous-zone ainsi calculé pour obtenir le volume réel de ladite charge (24).

5. Appareil selon une ou plusieurs des revendications précédentes, **caractérisé en ce que** ledit logiciel (40) comprend un module (60) configuré pour:

- diviser la surface supérieure de la charge (24), telle qu'elle a été identifiée dans l'image sélectionnée (58), en une pluralité de sous-zones de dimensions connues,
- déterminer la hauteur maximale, minimale et/ou moyenne de la charge (24) et/ou l'enveloppe de la surface supérieure (31) de la charge elle-même, sur la base de la zone de profondeur correspondante associée à l'image sélectionnée (58) et par rapport à chacune desdites sous-zones.

6. Appareil selon une ou plusieurs des revendications précédentes, **caractérisé en ce qu'**il comprend des moyens de détection latérale (10), qui sont positionnés de façon à encadrer latéralement ladite zone de travail (20) afin d'acquérir une séquence d'images des surfaces latérales de ladite charge mobile (24), ladite au moins une unité de commande et de traitement (12) étant connectée auxdits moyens de détection latérale (10).

7. Appareil selon une ou plusieurs des revendications précédentes, **caractérisé en ce qu'**il comprend une structure porteuse (2) sur laquelle sont installés lesdits moyens de détection supérieurs (8), ladite structure porteuse (2) comprenant:

- au moins un montant (4) positionné au niveau de ladite zone de travail (20), ou
- un montant (4) positionné au niveau de ladite zone de travail (20) et une traverse (6) associée au sommet dudit montant (4), ou
- une traverse (6) associée sur le dessus à deux montants (4), qui délimitent mutuellement ladite zone de travail (20) et qui sont de préférence réunis par ladite traverse (6).

8. Appareil selon la revendication 6, **caractérisé en ce que**, pour déterminer la présence et/ou le nombre de palettes (30) qui forment ladite au moins une charge (24) qui est manipulée par ledit transporteur (22) à travers ladite pièce zone (20), **caractérisée en ce que** ledit logiciel (40) est également configuré pour:

- sélectionner au moins une image (67), qui est la plus importante pour déterminer la présence et/ou le nombre de palettes (30) de ladite charge (24), dans la séquence d'images acquises par lesdits moyens de détection latérale (10),
- déterminer la présence et/ou le nombre de palettes (30) qui forment ladite charge (24) en identifiant les portions correspondant aux ouvertures latérales prévues dans chaque palette (30) dans l'image ainsi sélectionnée (58).

9. Appareil selon une ou plusieurs des revendications précédentes, **caractérisé en ce que** ledit logiciel (40) comprend un module (50) pour identifier automatiquement la présence d'un mouvement dans la zone de travail (20) sur la base du acquisitions effectuées par lesdits moyens supérieurs (8).

10. Appareil selon une ou plusieurs des revendications précédentes, **caractérisé en ce que** ledit module (50) reçoit la séquence d'images acquise par lesdits moyens de détection supérieurs (8) et est configuré pour comparer en temps réel chacune desdites images avec une image de référence (51) qui encadre la zone de travail vide et pour stocker les images acquises par lesdits moyens de détection supérieurs (8) lorsque la différence entre les images comparées dépasse un seuil prédéfini.

11. Appareil selon une ou plusieurs des revendications précédentes, **caractérisé en ce que** ledit logiciel (40) comprend un module (52) configuré pour reconnaître la présence d'une ou plusieurs charges (24) à analyser et la présence d'un ou plusieurs supports (22) et opérateurs dans l'image sélectionnée (58) ou toutes les images acquises par lesdits moyens de détection (8 et/ou 10).

12. Appareil selon une ou plusieurs des revendications précédentes, **caractérisé en ce que** pour sélectionner une seule image dans la séquence d'images de la scène encadrée acquises par lesdits moyens de détection (8 et/ou 10), une seule image la plus importante pour déterminer les dimensions et/ou le volume d'au moins une charge (24) et/ou pour déterminer le nombre de palettes de ladite charge (24), ledit logiciel (40) comprend un module (54) qui est configuré pour:

- analyser toutes les images (55) acquises et stockées lors du passage de la charge (24), afin d'associer automatiquement une partition représentative de la qualité de visualisation de ladite charge (24) dans chaque image à chacune,
- sélectionner l'image (58) qui a le meilleur score, parmi toutes les images (55).

**13.** Appareil selon une ou plusieurs des revendications précédentes, **caractérisé en ce que** ledit logiciel (40) comprend un module (72) configuré pour obtenir la hauteur (74) de la surface inférieure de la charge (24) à partir du sol et/ou l'inclinaison (75) de la charge par rapport à sa disposition verticale correcte sur la base d'au moins une image obtenue par lesdits moyens de détection latérale (10) et **en ce que** ledit module (60) est configuré pour déterminer la hauteur réelle de la charge (24) en utilisant les données de hauteur (74) de la surface inférieure de la charge (24) par rapport au sol et/ou les données d'inclinaison (75) de la charge par rapport à son correspondant agencement vertical, lesdites données étant déterminées par ledit module (72).

**14.** Appareil selon une ou plusieurs des revendications précédentes, **caractérisé en ce que** ledit logiciel (40) comprend un module (76) configuré pour déterminer un indice de planarité de la surface supérieure (31) de la charge (24) par utiliser les images et/ou les données de profondeur qui concernent la surface elle-même et qui ont été acquises par lesdits moyens de détection supérieurs (8).

**15.** Appareil selon une ou plusieurs des revendications précédentes, **caractérisé en ce qu'**il comprend des moyens qui sont configurés, à partir d'une ou plusieurs des images acquises, pour reconnaître le type de la ou des palettes (30) présentes dans ladite charge (24) et/ou pour en vérifier les conditions de surface.

FIG. 1

FIG. 2

FIG. 3

FIG. 4

FIG. 5

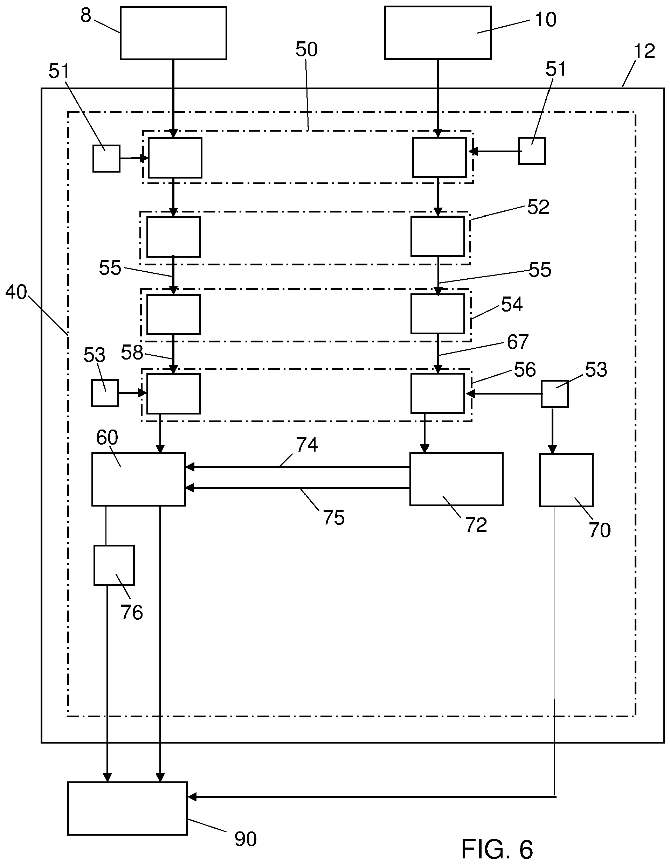

FIG. 6

FIG. 7A

SCORE = 0.6

FIG. 7B

SCORE = 0.75

FIG. 7C

SCORE = 0.9

FIG. 7D

SCORE = 0.62

FIG. 7E

SCORE = 0.8

FIG. 8A

FIG. 8B

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2439487 B1
- US 7757946 B2
- US 8599303 B2
- US 6798528 B1
- US 20080035390 A
- WO 2016020038 A
- US 2014029796 A
- US 20110317005 A
- US 8711206 B
- US 8740794 B
- US 8493496 B
- US 8150142 B